# EUROPEAN PATENT APPLICATION

(11) **EP 1 162 836 A2**
(43) Date of publication of application: **12.12.2001**
(21) Application number: 01111960.9
(22) Date of filing: 21.05.2001
(51) Int. Cl.: H04N 5/46

(54) **Television receiver for receiving both analog and digital broadcast programmes**

(30) Priority: 23.05.2000 JP 2000151043
(71) Applicant: Pioneer Corporation, Meguro-ku, Tokyo (JP)
(72) Inventor: Shibata, Koji, c/oPioneer Corp. Kawagoe Works, Kawagoe-shi, Saitama (JP)
(74) Representative: Klingseisen, Franz, Dipl.-Ing.

(57) **Abstract**

Two systems of an analog demodulating part and a digital demodulating part are arranged within a receiver. An AM-demodulated signal level of receiving radio wave of the two systems is detected by using an AM wave detector arranged in the analog demodulating part. In the signal level detection, the signal level of the broadcasting radio wave from an analog broadcasting station and a digital broadcasting station is precisely detected by switching a bias voltage of the AM wave detector.

## Description

### BACKGROUND OF THE INVENTION

### 1. Field of the Invention

The present invention relates to a television receiver for both analog and digital broadcasts which is mounted to a vehicle such as an automobile, etc. and can receive both an analog television broadcast and a digital television broadcast.

### 2. Description of the Related Art

A known receiving system has been provided for selecting an antenna capable of receiving a signal by switching between a plurality of receiving antennas when the reception condition of a radio wave deteriorates. Such a system is called a space diversity system, and is widely utilized conventionally in a broadcast receiver.

It is necessary to monitor which antenna is best in a receiving state at any time so as to execute such a diversity system. Namely, a radio frequency detecting circuit of the receiver is also switched and connected to an antenna other than the antenna presently receiving a signal at short time intervals. Receiving states of all the antennas must be thus monitored.

These switching and connecting operations of the antennas must be performed so as not to have a negative influence on the presently received signal.

In contrast to this, it is expected that a digital television broadcast for broadcasting digital video data will be in practical use in the near future, in addition to the present analog television broadcast. Accordingly, a television receiver capable of receiving both analog and digital broadcasts is required.

### OBJECT AND SUMMARY OF THE INVENTION

The diversity function as mentioned above is also desired in such a television receiver for receiving both analog and digital broadcasts.

Therefore, an object of the present invention is to provide a television receiver for both analog and digital broadcasts having the diversity function.

The invention provides a television receiver for both analog and digital broadcasts, comprising a plurality of antennas; a digital demodulating part for selecting one digital television broadcasting radio wave, and demodulating the selected broadcasting radio wave; an analog demodulating part for selecting one AM-modulated analog television broadcasting radio wave, and AM-demodulating the selected broadcasting radio wave; and an antenna switching part for selecting at least one of the antennas, and relaying the broadcasting radio wave received by the selected antenna to the digital demodulating part and the analog demodulating part; wherein the antenna switching part performs an operation for selecting and switching the antennas when the antenna switching part detects a reduction in signal level of an AM-demodulated signal outputted from the analog demodulating part.

### BRIEF EXPLANATION OF THE DRAWINGS

Fig. 1 is a block diagram showing the construction of a television receiver for both analog and digital broadcasts in an embodiment of the present invention.

Fig. 2 is a time chart showing the waveforms of input and output signals of an AM wave detecting circuit 16 in the receiver of Fig. 1.

Fig. 3 is a time chart showing a guard interval in an ISDB-T signal, and the operation of an antenna switching circuit in the receiver of Fig. 1.

Fig. 4 is a block diagram showing the construction of a television receiver for both analog and digital broadcasts having two sets of each of the antenna switching circuit, a radio frequency signal circuit and a tuning-frequency control circuit in a second embodiment of the invention.

### DETAILED DESCRIPTION OF THE PREFERRED EMBODIMENT

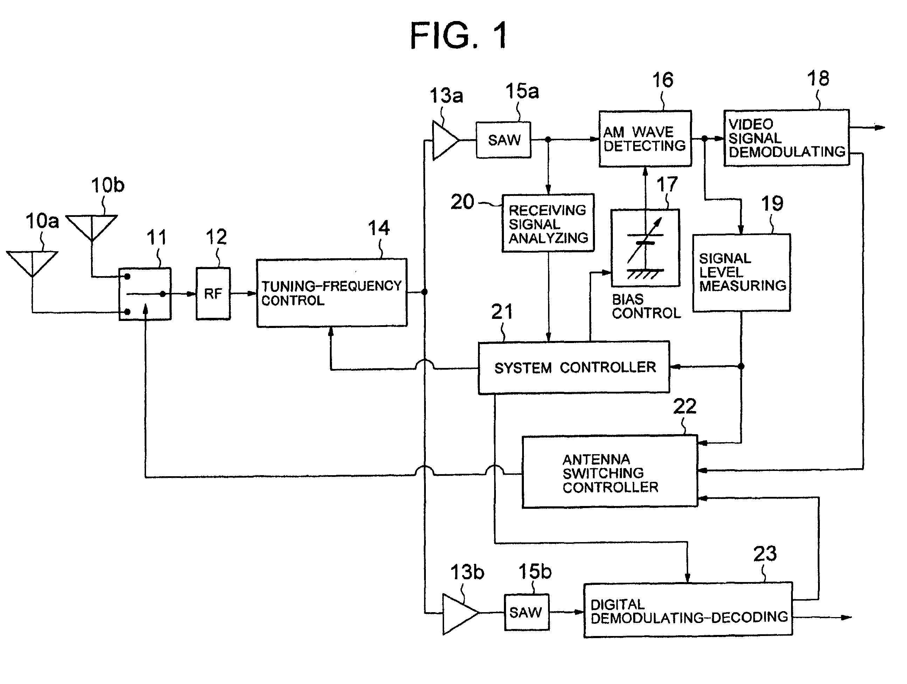

Fig. 1 is a block diagram showing the construction of a television receiver capable of receiving both ISDB-T (integrated digital broadcast) and an analog television broadcast in an embodiment of the present invention.

In Fig. 1, receiving antennas 10a and 10b are compact antennas such as a rod antenna, a plane antenna, etc., and receive radio waves from a broadcasting station. The plural antennas are arranged to perform space diversity utilizing a difference in receiving characteristics due to a difference in antenna position. Namely, if spatial arrangements of the receiving antennas are different from each other, radio wave propagation of a multipath wave, fading, etc. are different even when the radio waves are transmitted from the same broadcasting station. Therefore, phases and frequency spectrums of the radio waves received by each antenna are different from each other. In the space diversity, an antenna providing the best reception is selected from the plural antennas. In consideration of principle of the space diversity, the number of antennas is not limited to two as shown in Fig.1. Two or more antennas can also be used.

An antenna switching circuit 11 selects one of the plural receiving antennas on the basis of a switching signal from a antenna switching controller 22. For example, the antenna switching circuit 11 is a high frequency change-over switch using a FET, and normally selects an antenna providing the best reception. The construction of an input part of the antenna switching circuit 11 is designed in accordance with the number of antennas.

A radio frequency signal circuit 12 is a circuit for performing processing such as amplification, etc. with respect to a received radio wave inputted via the antenna switching circuit 11. The radio frequency signal circuit 12 corresponds to a so-called front-end circuit of the receiver.

A tuning-frequency control circuit 14 is a circuit for tuning and selecting a radio wave of a predetermined desirable broadcasting station from received radio waves in accordance with station selecting instructions from a system controller 21. The radio wave selected by this circuit 14 is converted to an intermediate frequency signal suitable for wave detecting processing at a subsequent stage.

Buffer amplifiers 13a and 13b are arranged to distribute an output from the tuning-frequency control circuit 14 to an analog demodulating section and a digital demodulating section at subsequent stages.

SAW filters 15a and 15b are surface acoustic wave band-pass filters for removing a spurious signal from a receiving signal having a frequency converted to a predetermined desirable intermediate frequency.

An AM wave detecting circuit 16 is a circuit for detecting a video signal carrier wave of the analog television broadcast converted to a video intermediate frequency, and extracting a video signal. An envelope of the video signal and a predetermined direct current bias voltage are superposed and included in an output signal of the AM wave detecting circuit 16.

A bias voltage control circuit 17 is a circuit for superposing an arbitrary direct current bias voltage on the wave detecting output from the AM wave detecting circuit 16. A value of such a bias voltage is controlled by the system controller 21.

A video signal demodulating circuit 18 extracts various kinds of signals such as a luminance component signal, a synchronizing signal, and a color burst signal, included in the video signal from the AM wave detecting circuit 16. The video signal demodulating circuit 18 then demodulates the received video signal. The video signal demodulating circuit 18 also detects a vertical synchronizing signal showing a vertical retrace line interval of the video signal. The video signal demodulating circuit 18 transmits detection timing of this vertical synchronizing signal to the antenna switching controller 22.

A signal level measuring circuit 19 measures a signal level of the output signal from the AM wave detecting circuit 16, and transmits a value of this signal level to the system controller 21 and the antenna switching controller 22.

A receiving signal analyzing circuit 20 analyzes a frequency spectrum of an output signal of the SAW filter 15a. The receiving signal analyzing circuit 20 then judges whether a broadcasting radio wave selected by the tuning-frequency control circuit 14 is transmitted from an analog station or an ISDB-T station. The receiving signal analyzing circuit 20 transmits results of this judgment to the system controller 21. The receiving signal analyzing circuit 20 is arranged to discriminate an attribute of the tuned and selected broadcasting wave to provide a broadcast in the same frequency band in the analog station and the ISDB-T station.

In this embodiment, the circuit elements as discussed above constitute the so-called analog demodulating section.

In contrast to this, a digital demodulating-decoding circuit 23 is a circuit for performing OFDM (Orthogonal Frequency Division Multiplex) demodulation of the broadcasting radio wave from the ISDB-T station, and then decoding received data. This digital demodulating-decoding circuit 23 detects a guard interval showing the delimitation of a data symbol series included in a digital signal from the ISDB-T broadcasting station. The digital demodulating-decoding circuit 23 then transmits detection timing of this guard interval to the antenna switching controller 22.

In this embodiment, the buffer amplifier 13b, the SAW filter 15b and the digital demodulating-decoding circuit 23 discussed above constitute the so-called digital demodulating section.

The antenna switching controller 22 receives vertical synchronization timing, guard interval detection timing and a receiving signal level from the video signal demodulating circuit 18, the digital demodulating-decoding circuit 23 and the signal level measuring circuit 19. The antenna switching controller 22 then transmits a switching signal for selecting one of the antennas 10a and 10b by the antenna switching circuit 11 to the antenna switching circuit 11.

The system controller 21 is mainly constructed by a microcomputer, and generalizes and controls an operation of the entire receiver. This system controller 21 includes a memory such as a ROM (Read Only Memory), a RAM (Random Access Memory), etc. Various kinds of programs for controlling the operation of this receiver are stored to the ROM. Various kinds of processing results in an executing process of these programs are temporarily stored to the RAM.

First, diversity in a digital television broadcast receiving mode will be explained in accordance with Fig. 1.

A broadcasting radio wave from the ISDB-T broadcasting station is inputted from the antenna 10a or 10b selected by the antenna switching circuit 11 to the tuning-frequency control circuit 14 via the radio frequency signal circuit 12. The broadcasting radio wave to be desirably received is selected by the tuning-frequency control circuit 14, and is then transmitted to both sections of the analog demodulating section and the digital demodulating section via the buffer amplifiers 13a, 13b. In the digital demodulating section, this broadcasting radio wave is demodulated and decoded by the digital demodulating-decoding circuit 23. Decoded digital data are outputted to various kinds of unillustrated output processing circuits of a video, an audio, etc.

In contrast to this, in the analog demodulating section, the broadcasting radio wave is transmitted to the AM wave detecting circuit 16 via the SAW filter 15a. Namely, a carrier wave of the broadcasting radio wave of the ISDB-T broadcasting station processed at present by the digital demodulating section is transmitted to the AM wave detecting circuit 16. The AM wave detecting circuit 16 extracts an envelope of such a carrier wave by a wave detecting method of linear detection, or synchronous detection, etc. The AM wave detecting circuit 16 then transmits this envelope to the signal level measuring circuit 19 as a wave detecting output of the receiving signal. The value of a direct current bias voltage superposed on this wave detecting output is controlled such that this value becomes a predetermined value by the bias voltage control circuit 17. The system controller 21 determines this predetermined value on the basis of judging results of the receiving signal analyzing circuit 20. Namely, the system controller 21 determines this predetermined value by judging whether the presently received broadcasting station signal is the analog television station or the ISDB-T station.

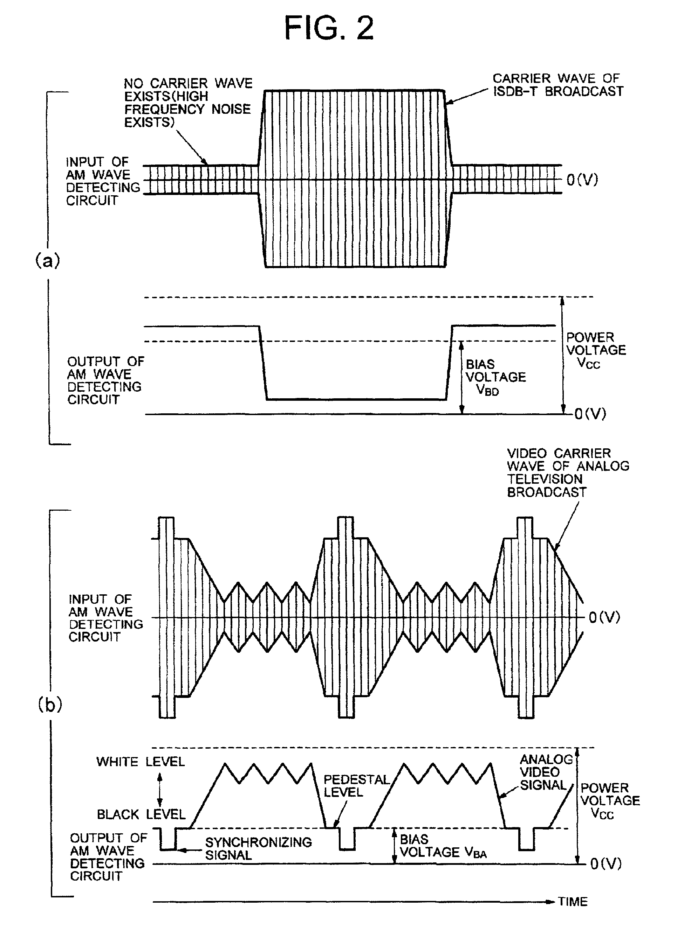

When the carrier wave of the ISDB-T broadcast is detected, a wave detecting output as shown in Fig. 2(a) is obtained. Namely, a direct current bias voltage V_{BD}(V) as a relatively high bias voltage is superposed on the wave detecting output of the AM wave detecting circuit 16. This is because the AM wave detecting circuit 16 detects an OFDM-modulated carrier wave of the ISDB-T broadcast by a method similar to that of the conventional analog television broadcast. A video carrier wave of the analog television broadcast is generally negatively modulated (in an amplitude modulating system for maximizing an amplitude of the carrier wave in the vicinity of the zero level of a modulated wave). In contrast to this, in the case of the ISTB-T broadcast, the amplitude of the carrier wave is constant. The carrier wave is detected by comparing zero level and peak level of a modulated wave. Accordingly, it is necessary to set the bias voltage as shown in Fig. 2(a) to reliably detect the carrier wave from high frequency noise. Namely, it is necessary to set the bias voltage V_{BD}(V) to be as high as possible within the range of a power voltage V_{CC}(V), and enlarge a dynamic range in a negative direction of the wave detecting output.

The receiving signal analyzing circuit 20 receiving an output of the SAW filter 15a judges whether the receiving signal is transmitted from the analog television station or the ISDB-T station. The receiving signal analyzing circuit 20 then checks a frequency spectrum of the receiving signal. With respect to the signal from the analog television station, a peak of the frequency spectrum exists in a frequency component of the video carrier wave, a sub-carrier wave for a color signal, etc. Further, a higher harmonic wave component appears at frequency intervals of a horizontal synchronizing signal and a vertical synchronizing signal. Therefore, no frequency spectrum of the receiving signal is flat. In comparison with this, the signal from the ISDB-T station is OFDM-modulated by using many orthogonal carrier waves close to each other in frequency. Therefore, this frequency spectrum becomes flat in an entire band. Accordingly, the receiving signal analyzing circuit 20 compares signal levels at plural frequency points within the receiving frequency band. Thus, it is possible to judge whether the receiving signal is transmitted from the analog television station or the ISDB-T station.

The receiving signal analyzing circuit 20 is not necessarily required in the construction of the present receiver. For example, there is a case in which the analog or digital attribute of a receivable broadcasting station is known in advance in accordance with an area. In this embodiment, such a known attribute with respect to the broadcasting station can be preset to an unillustrated memory within the system controller 21. Then, the system controller 21 may also judge the attribute of the receiving station by retrieving and referring to such a memory.

The bias voltage control circuit 17 switches the bias voltage value superposed on the wave detecting output of the AM wave detecting circuit 16 on the basis of instructions from the system controller 21. For example, the bias voltage control circuit 17 decodes an instruction code from the system controller 21 as this switching method. The bias voltage control circuit 17 selects a Zener diode corresponding to the value of a bias voltage based on this instruction. The bias voltage control circuit 17 may then also insert the selected Zener diode between the ground of the AM wave detecting circuit 16 and the power source ground by using an analog switch of a FET, a transistor, etc.

The signal level measuring circuit 19 measures a level of the wave detecting signal transmitted from the AM wave detecting circuit. The signal level measuring circuit 19 then converts this measured value to a digital value, and transmits the digital value to the system controller 21 and the antenna switching controller 22.

The system controller 21 and the antenna switching controller 22 can know the receiving signal level of a radio wave of the presently received ISDB-T broadcast by such an operation. Namely, the system controller 21 and the antenna switching circuit 22 can know the receiving signal level at any time independently of demodulating and decoding processings in the digital demodulating-decoding circuit 23 without preventing these processings.

When the receiving signal level of the radio wave of the ISDB-T broadcast becomes lower than a predetermined threshold value, the antenna switching controller 22 judges that it is necessary to execute diversity by switching the receiving antennas.

In contrast to this, the digital demodulating-decoding circuit 23 detects a guard interval included in the broadcasting wave in parallel with the demodulating and decoding operations of the ISDB-T broadcasting wave. The digital demodulating-decoding circuit 23 then transmits detection timing of the guard interval to the antenna switching circuit 22.

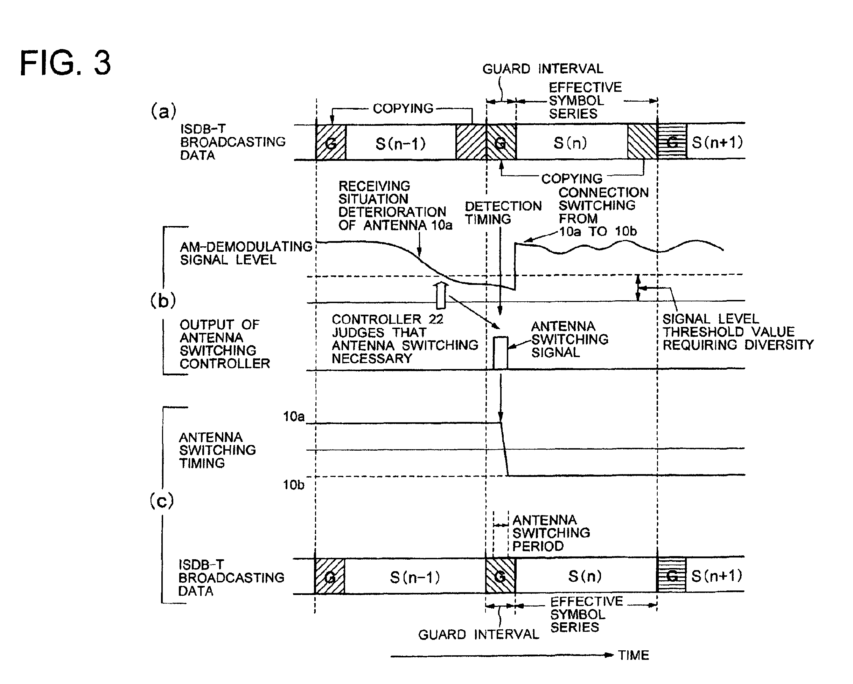

As shown in Fig. 3(a), the guard interval is one portion of a data series (hereinafter called an effective symbol series) digitally modulated. Namely, the guard interval is a portion in which a symbol series having a length from 1/4 to 1/32 from the last of one effective symbol series is copied and is added to the head of the effective symbol series. The delay interference between effective symbols due to a reflected wave such as a multipath wave, etc. can be prevented by forming such a portion. Thus, it is possible to prevent a phenomenon including a ghost from being a major obstacle in the television broadcasting radio wave.

In the receiver, transmitted data can be reproduced if only a portion of the effective symbol series removing the guard interval is demodulated. Namely, no signal of the guard interval is required. Accordingly, the guard interval portion has no influence on the demodulation of data in the receiver even when the receiving signal fades and disappears.

Therefore, the antenna switching controller 22 performs processing as shown in Fig. 3(b). Namely, when the signal level of the broadcasting radio wave of the ISDB-T station during the signal reception is reduced, the antenna switching controller 22 judges that diversity using antenna switching is required. After this judgment, the antenna switching controller 22 outputs an antenna switching signal to the antenna switching circuit 11 in synchronization with detection timing of the guard interval transmitted from the digital demodulating-decoding circuit 23, i.e., only during a receiving period of the guard interval. This situation is shown in Fig. 3(c). The antenna switching circuit 11 switches connection of the antenna 10 and the radio frequency signal circuit 12 on the basis of the antenna switching signal. In this case, the connection is switched from the antenna 10a deteriorated in a receiving situation to the other antenna 10b.

Thus, in this embodiment, diversity similar to that in the receiving case of the analog television broadcast can be performed without fading and loss of the receiving data even when a signal of the ISDB-T broadcast is received.

Next, a diversity operation in an analog television broadcast receiving mode will be explained in this embodiment.

A radio wave from the analog television station is received by the antenna 10a or 10b. Thereafter, a receiving signal is transmitted to the analog demodulating section through the antenna switching circuit 11, the radio frequency signal circuit 12, the tuning-frequency control circuit 14 and the buffer amplifier 13a. Fig. 2(b) shows a case in which the broadcasting radio wave from the analog television station is processed in the analog demodulating section. In this case, the value of a direct current bias voltage superposed on a wave detecting output of the AM wave detecting circuit 16 is set to V_{BA}(V) as a relatively low bias voltage. When a video carrier wave of the analog television broadcasting radio wave is detected, it is necessary to faithfully reproduce a high level portion of a negatively modulated video signal shown in Fig. 2(b) (i.e., a strong white level portion of a luminance component) within the range of a power voltage V_{CC}(V). In contrast to this, a signal portion at a level equal to or lower than a pedestal level of Fig. 2(b) is constructed by only a synchronizing signal. Therefore, no problem is caused even when the signal portion at the level lower than the synchronizing signal level is clamped at a level of 0(V). Therefore, when the analog television video carrier wave is detected, the value of the direct current bias voltage superposed on the wave detecting output is determined as V_{BA}(V). This V_{BA}(V) is lower than V_{BD}(V) as a bias voltage at a receiving time of the digital station. Thus, it is possible to secure a wide dynamic range between the power voltage V_{cc}(V) and the bias voltage V_{BA}(V). Accordingly, a received analog video signal can be faithfully reproduced.

The video signal demodulating circuit 18 detects a vertical synchronizing signal included in the video signal. The video signal demodulating circuit 18 transmits detection timing of the vertical synchronizing signal to the antenna switching controller 22. The antenna switching controller 22 detects the signal level of the analog station broadcasting radio wave presently received through the AM wave detecting circuit 16 and the signal level measuring circuit 19. When this signal level is reduced, the antenna switching controller 22 outputs the antenna switching signal to the antenna switching circuit 11 in synchronization with the detection timing of the vertical synchronizing signal. Thus, the antenna switching circuit 11 can switch the antennas within the vertical retrace line interval as an untransmitting period of the luminance component of the video signal.

The diversity operation in the digital broadcast receiving mode and the analog broadcast receiving mode in this embodiment is performed as discussed above.

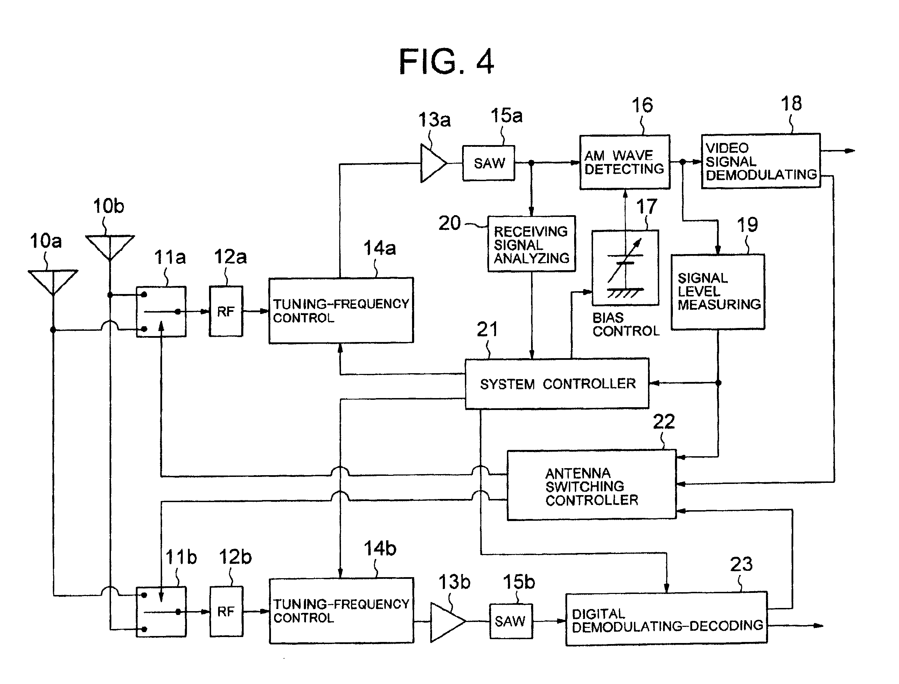

A second embodiment of the invention is shown in the block diagram of Fig. 4. In this embodiment, two sets each of antenna switching circuits 11a, 11b, radio frequency signal circuits 12a, 12b and tuning-frequency control circuits 14a, 14b are arranged. A antenna switching controller 22 can separately and independently control an operation of each antenna switching circuit. A system controller 21 can give different station selecting instructions for each of the tuning-frequency control circuits.

An operation of the receiver in the second embodiment will next be explained.

In Fig. 4, a digital demodulating section selects an ISDB-T broadcasting radio wave from one digital broadcasting station by using the tuning-frequency control circuit 14b, and performs receiving processing. The system controller 21 simultaneously outputs tuning selecting instructions with respect to a broadcasting station except for the one digital broadcasting station to the tuning-frequency control circuit 14a of the analog demodulating section. Thus, a broadcasting radio wave from the broadcasting station except for the digital broadcasting station is inputted to the analog demodulating section. The system controller 21 can detect a receiving level of the radio wave from this broadcasting station through the AM wave detecting circuit 16 and the signal level measuring circuit 19. Thus, the system controller 21 can judge whether the broadcasting radio wave from this broadcasting station can be received or not. Further, the system controller 21 can also judge an attribute as to whether this broadcasting station is the analog station or the ISDB-T station by utilizing the receiving signal analyzing circuit 20. As explained above, the system controller 21 can set an output bias voltage of the AM wave detecting circuit 16 to be different in accordance with a difference in attribute of this broadcasting station.

In the second embodiment, the following methods are considered as a method for detecting a signal receiving situation with respect to plural other broadcasting stations except for the digital broadcasting station performing signal receiving processing as mentioned above. For example, it is possible to execute various kinds of detecting methods such as a method for scanning all broadcasting stations within a receiving band of the receiver, and a method for scanning only broadcasting stations preset to the receiver, etc.

There are the following advantages to detecting such a signal receiving situation of the other broadcasting stations. Namely, the system controller 21 can determine existence of other receivable broadcasting stations and attributes of these other broadcasting stations at any time irrespective of the analog broadcasting station or the ISDB-T broadcasting station while the system controller 21 receives a radio wave from one ISDB-T broadcasting station. Accordingly, when the system controller 21 terminates the signal reception of the ISDB-T broadcasting station receiving a signal at present and selects another broadcasting station, the system controller 21 can rapidly make the selection. Further, when the signal receiving situation of the ISDB-T broadcasting station presently receiving a signal is deteriorated and switching of the receiving station is required, the system controller 21 can also rapidly select another broadcasting station.

In accordance with the embodiment shown in Fig. 4, the system controller 21 can separately and independently switch, and control operations of the two antennas 11a and 11b. Therefore, while one antenna and the digital demodulating section are connected to each other, the other of the plural antennas can be freely switched and connected to the analog demodulating section. Namely, receiving characteristics of each antenna can be measured by using the analog demodulating section at any time without interrupting the signal reception from the ISDB-T broadcasting station receiving a signal. Thus , it is possible to further improve the effects of a diversity function using the antenna switching.

In the embodiment of the invention, power supply of the digital demodulating section may be stopped to reduce power consumption of the receiver at a receiving time of the analog broadcast. Further, the power supply may be similarly stopped in the analog demodulating section except for its one portion (the receiving signal judging circuit, the AM wave detecting circuit, etc.) at a receiving time of the ISDB-T broadcast.

The digital broadcast in the embodiment of the invention is not limited to the ISDB-T broadcast, but a digital broadcast able to detect the signal level of a broadcasting wave by the AM wave detecting circuit of the analog demodulating section may be also used.

As explained above in detail, in accordance with the invention, similar to the conventional analog television receiver, it is possible to perform diversity using switching of the receiving antennas at the receiving time of the digital television broadcast. Further, fading and loss of receiving data does not occur caused even when such diversity is performed. Further, it is possible to detect a signal receiving situation of another broadcasting station except for a receiving-regenerating broadcasting station while a signal of the digital television broadcast is received and regenerated.

It is understood that the foregoing description and accompanying drawings set forth the preferred embodiments of the invention at the present time. Various modifications, additions and alternative designs will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

## Claims

1. A television receiver for both analog and digital broadcasts, comprising:
a plurality of antennas;
a digital demodulating part for selecting one digital television broadcasting radio wave, and demodulating the selected broadcasting radio wave;
an analog demodulating part for selecting one AM-modulated analog television broadcasting radio wave, and AM-demodulating the selected broadcasting radio wave; and
an antenna switching part for selecting at least one of said antennas, and relaying the broadcasting radio wave received by the selected antenna to said digital demodulating part and said analog demodulating part;
wherein said antenna switching part performs an operation for selecting and switching the antennas when the antenna switching part detects a reduction in signal level of an AM-demodulated signal outputted from said analog demodulating part.

2. A television receiver for both analog and digital broadcasts according to claim 1, wherein said analog demodulating part has an attribute judging part able to judge an attribute as to whether the received broadcasting radio wave is transmitted from an analog broadcasting station or a digital broadcasting station, and said analog demodulating part switches a value of a DC bias voltage superposed on said AM-demodulated signal to a different value in each of a digital television broadcast receiving mode and an analog television broadcast receiving mode based on judging results of said attribute judging part.

3. A television receiver for both analog and digital broadcasts according to claim 2, wherein, said digital demodulating part selects and receives one digital television broadcasting radio wave, and said analog demodulating part selects and receives a broadcasting radio wave other than said one digital television broadcasting radio wave, and the receiver has an other station retrieving part for retrieving one of a receivable analog and digital broadcasting radio wave in said broadcasting radio wave other than said one digital television broadcasting radio wave by judging the receiving level of the AM-demodulated signal from said analog demodulating part.

4. A television receiver for both analog and digital broadcasts according to claim 2, wherein, said digital demodulating part selects and receives one digital television broadcasting radio wave, and said analog demodulating part selects and receives a broadcasting radio wave other than said one digital television broadcasting radio wave, and the attribute of the broadcasting radio wave other than said one digital television broadcasting radio wave can be discriminated based on judging results of said attribute judging part at this time.

5. A television receiver for both analog and digital broadcasts according to claim 3 or 4, wherein said antenna switching part has plural change-over switches, and can simultaneously connect the different antennas to each of said digital demodulating part and said analog demodulating part.

6. A broadcasting radio wave receiver comprising:
a plurality of antennas;
plural receiving parts for receiving broadcasting radio waves of different broadcasting systems;
an antenna switching part for selecting at least one of said antennas, and relaying the broadcasting radio waves received by the selected antenna to said receiving parts; and
a receiving state recognizing part for recognizing a receiving state of said broadcasting radio waves in reception of the broadcasting radio waves through a single one of said plural receiving parts by means of at least one receiving part other than said single one of the receiving parts;
wherein said antenna switching part switches the antennas based on recognizing results of said receiving state recognizing part.
